# EUROPÄISCHE PATENTANMELDUNG

(11) **EP 3 991 549 A1**
(43) Veröffentlichungstag der Anmeldung: **04.05.2022**
(21) Anmeldenummer: 20000385.3
(22) Anmeldetag: 27.10.2020
(51) Int. Cl.: A01K 11/00, B68C 1/12, G09F 3/04, G09F 7/04

(54) **KENNZEICHNUNG VON TIEREN, INSBESONDERE PFERDEN**

(71) Anmelder: Rüenberg UG, 48599 Gronau (DE)
(72) Erfinder: Niehues, Timo, 48599 Gronau (DE)
(74) Vertreter: Busse, Harald F.W.

(57) **Zusammenfassung**

Eine auswechselbare Kennzeichnung (1) von Tieren (T), insbesondere von Pferden, wobei die Kennzeichnung (1) eine Halterung (2) mit einer durchgehenden oder unterbrochenen Platte (3) umfaßt, die in montierter Stellung eine vom Tier (T) nach außen weisende Außenseite (4) aufweist, an der mehrere Zeichen (8), wie etwa Nummern, nebeneinander halterbar oder gehalten sind, wird so ausgebildet, daß die Platte (3) zumindest bereichsweise para- oder ferromagnetisch ist und an zumindest einem rückseitig festgehaltenen Magneten (5) selbst magnetisch halterbar ist, wobei auf der Platte (3) halterbare oder gehaltene Zeichen (8) mit Körpern (9) aus einem zumindest teilweise metallischen Material gebildet sind und über Magnetkraft an der Platte (3) halterbar oder gehalten sind.

## Beschreibung

Die Erfindung betrifft eine auswechselbare Kennzeichnung von Tieren, insbesondere von Pferden, wobei die Kennzeichnung eine Halterung mit einer durchgehenden oder unterbrochenen Platte umfaßt, die in montierter Stellung eine vom Tier nach außen weisende Vorderseite aufweist, an der mehrere Zeichen, wie etwa Nummern, nebeneinander halterbar oder gehalten sind, nach dem Oberbegriff des Anspruchs 1 oder des Anspruchs 5.

Es ist bekannt, Startnummern, zum Beispiel drei- oder vierstellige Anordnungen, durch mehrere einzeln halterbare Zeichen, wie etwa Nummern, darzustellen. Diese Zeichen werden zum Beispiel einzeln hinter eine Klarsichtfolie geklemmt, was jedoch im Handling aufwendig ist und gerade bei häufigem Nummernwechsel daher nachteilig ist. Zudem unterliegt eine solche Folie Verschleiß und Verschmutzung und wird dadurch auf Dauer unansehnlich; die Transparenz leidet.

Der Erfindung liegt daher das Problem zugrunde, hier eine Verbesserung zu schaffen.

Die Erfindung löst dieses Problem durch eine Kennzeichnung mit den Merkmalen des Anspruchs 1 oder des Anspruchs 5, die einzeln oder in Kombination miteinander erfüllt sein können. Zu weiteren vorteilhaften Ausgestaltungen und Merkmalen der Erfindung wird auf die Ansprüche 2 bis 4 und 6 bis 15 verwiesen.

In der Ausbildung nach Anspruch 1 ist dadurch, daß die zur Aufnahme der Zeichen dienende Platte zumindest bereichsweise para- oder ferromagnetisch ist und an zumindest einem rückseitig festgehaltenen Magneten selbst magnetisch halterbar ist, eine leichte Auswechselbarkeit der Platte und auch deren Umsetzbarkeit an jede Stelle ermöglicht, an der ein halternder Magnet angeordnet werden kann. Dadurch, daß auf der Platte halterbare oder gehaltene Nummern mit Körpern aus einem zumindest teilweise metallischen Material gebildet sind und über Magnetkraft an der Platte halterbar oder gehalten sind, sind auch diese einerseits zuverlässig halterbar und andererseits auch leicht auswechselbar.

Wenn der zumindest eine rückseitig festgehaltene Magnet mittelbar oder unmittelbar in eine Schabracke eingenäht ist, kann die Kennzeichnung außen auf dieser Schabracke oder dergleichen Satteldecke erfolgen, beispielsweise schräg hinter einem Sattel - und damit von außen gut sichtbar und an einer Stelle, an der an sich keine weiteren Befestigungsmöglichkeiten vorgesehen waren.

Es versteht sich, daß auf beiden Seiten der Schabracke derartige Kennzeichnungen angebracht werden können.

Es ist auch möglich, daß mehrere derartiger Magnete an verschiedenen Stellen - nicht nur an der Schabracke - eingenäht sind, so daß die Kennzeichnung sehr einfach zwischen verschiedenen Positionen vertauscht werden kann.

Eine hohe Haltekraft ergibt sich beispielsweise, wenn der zumindest eine rückseitig festgehaltene Magnet ein Neodym-Magnet ist oder diesen umfaßt.

Für das Handling ist es weiterhin sehr günstig, den zumindest einen rückseitig festgehaltenen Magneten in einem Stoffbeutel anzuordnen und diesen mittelbar oder unmittelbar an der Schabracke zu vernähen.

In der Ausbildung nach Anspruch 5 muß die Platte nicht selbst magnetisch gehalten sein, sondern sie kann zumindest bereichsweise para- oder ferromagnetisch sein, wobei dann die darauf gehaltenen Zeichen an Körpern aus oder mit einem zumindest ferro- oder paramagnetischen Material gebildet sind und über Magnetkraft an der Platte halterbar oder gehalten sind. Die Platte selbst kann hingegen Ansätze für eine mechanische Halterung umfassen und somit beispielsweise rein mechanisch an einem Gurt bzw. Riemen oder einem anderen hintergreifbaren Teil gesichert sein.

Insbesondere sind die Ansätze jeweils paarweise und horizontal zueinander beabstandet ausgebildet. Damit ergibt sich eine Symmetrie, die eine einfache Montage mit nur geringen Möglichkeiten der Fehlbedienung ermöglicht.

Vorteilhaft sind die Ansätze jeweils hakenförmig und innerhalb einer paarweisen Anordnung einander entgegengesetzt angeordnet. Dann lassen sich zwischen diesen Haken Haltebänder verspannen, etwa jeweils ein Gummiband oder ähnliches flexibles Element. Sehr günstig lassen sich dabei Mähnengummis verwenden, die üblicherweise ohnehin in großer Zahl zum Zusammenbinden von Mähnenhaaren zu Turnieren und ähnlichen Veranstaltungen mitgenommen werden.

Weiter sind günstig die Ansätze an einer oberen Kante und an einer unteren Kante der Platte angeordnet, so daß diese an ihrem oberen und an ihrem unteren Ende gesichert werden kann und damit einem Verkippen oder Verlieren zuverlässig vorgebeugt ist. Der Verschleiß ist zudem minimiert.

Die Halterung der Platte kann oben und unten in gleicher Weise erfolgen.

Dabei kann von dem Gummiband oder ähnlichem flexiblen Element ein Gurt oder Riemen, insbesondere ein Trensenriemen, zur Halterung der Platte hintergreifbar oder hintergriffen sein. Die Platte ist dann an verschiedensten Stellen halterbar. Es reicht hierzu ein Band oder Gurt bzw. Riemen, hinter dem die Platte verklemmt werden kann.

Weiter kann vorteilhaft die Platte einen von der Vorderseite rückspringenden Bereich umfassen, dessen Größe zur Aufnahme eines Satzes von drei oder vier Nummern nebeneinander geeignet ist und der für diese Nummern unterseitig eine abstützende Kante aufweist. Zur Unterstützung einer magnetischen Halterung dieser Zeichen ist dann mit der unteren Kante auch noch ein formschlüssiges Untergreifen vorgesehen.

Um ein niedriges Gewicht der die Zeichen tragenden Körper zu erreichen und damit ihren guten Halt zu gewährleisten, umfassen die Körper für die Nummern oder dergleichen Zeichen zumindest zwei Komponenten, von denen eine Komponente eine magnetische Folie umfaßt und eine zweite, weiter außen liegende Komponente einen Bereich mit einer aufgedruckten Nummer oder einem Buchstaben oder anderem Zeichen umfaßt.

Sehr günstig ist die Komponente der magnetischen Folie dünner als einen Millimeter, insbesondere dünner als 0,7 Millimeter, um diese so sehr leicht zu halten. Das eigentliche Zeichen kann auf die zweite Komponente aufgedruckt sein, die dünner als die magnetische Folie ist und mit dieser insbesondere verklebt ist.

In allen Versionen kann auf eine abdeckende Folie außen für die Zeichen verzichtet werden. Das Handling ist dadurch deutlich vereinfacht. Ein Erblinden von Folie ist ebenfalls kein Problem mehr. Die Dauerhaltbarkeit ist erheblich verbessert, ebenso das Ablesen bei Nässe.

Auch irgendeine andere Halterung, die die Vorderseite der Startnummern oder ähnlicher Zeichen von außen überdecken würde, ist komplett entbehrlich.

Weitere Vorteile und Merkmale der Erfindung ergeben sich aus in der Zeichnung dargestellten und nachfolgend beschriebenen Ausführungsbeispielen des Gegenstandes der Erfindung.

In der Zeichnung zeigt:
- Fig. 1: eine schematische Seitenansicht eines vierbeinigen Tiers, hier eines Pferds, mit einer aufgelegten Satteldecke (Schabracke), an der eine Platte als Teil einer Kennzeichnung angebracht ist,

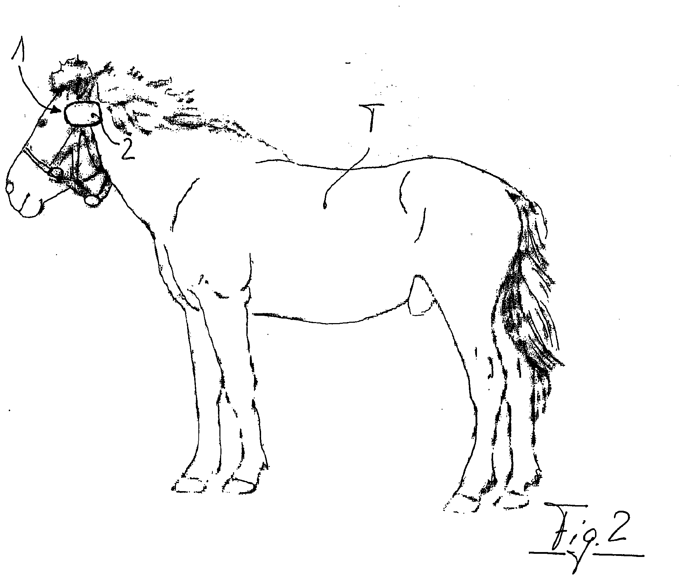

- Fig. 2: eine ähnliche Ansicht wie Figur 1, jedoch mit einer Anbringung einer Platte einer Kennzeichnung an einem Trensengurt,
- Fig. 3: eine schematische Draufsicht auf die Außenseite der an der Schabracke halterbaren Platte,
- Fig. 4: eine Ansicht der Platte nach Figur 3 in Ansicht auf die Rückseite mit einer Stofftasche, in die ein haltender Magnet (hier gestrichelt eingezeichnet) eingenäht ist,

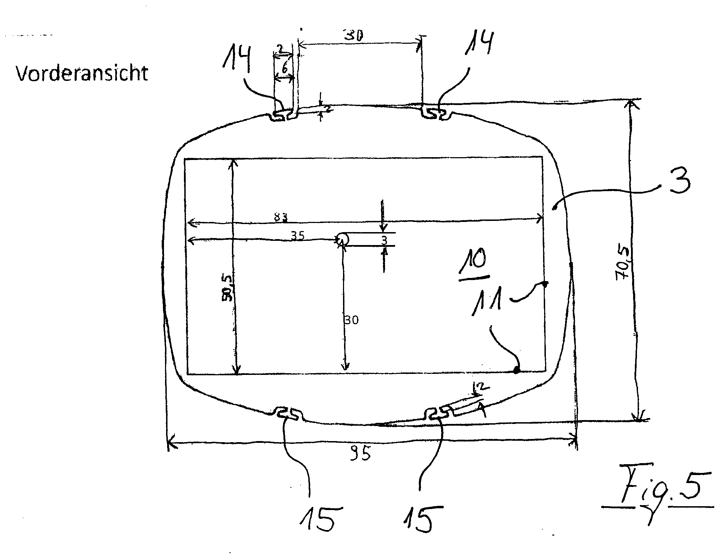

- Fig. 5: eine mechanisch halterbare Platte wie in der Anbringung nach Figur 2 in Ansicht von der Außenseite,
- Fig. 6: die Platte nach Figur 5 in Ansicht auf die Rückseite mit einer Befestigung über zwei Gummibänder hinter einem Gurt,
- Fig. 7: eine Draufsicht auf die Platte.

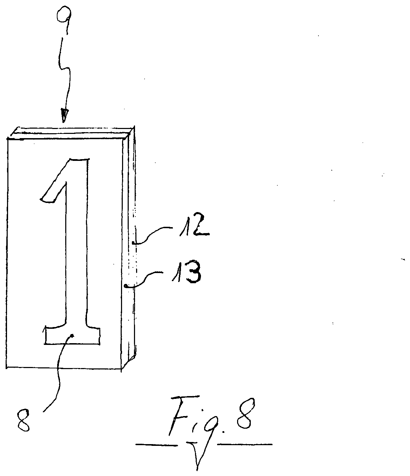

- Fig. 8: ein einzelnes Zeichen, hier als Zahl, mit einem Körper-in übertriebener Dicke dargestellt - zur Anbringung an der Platte.

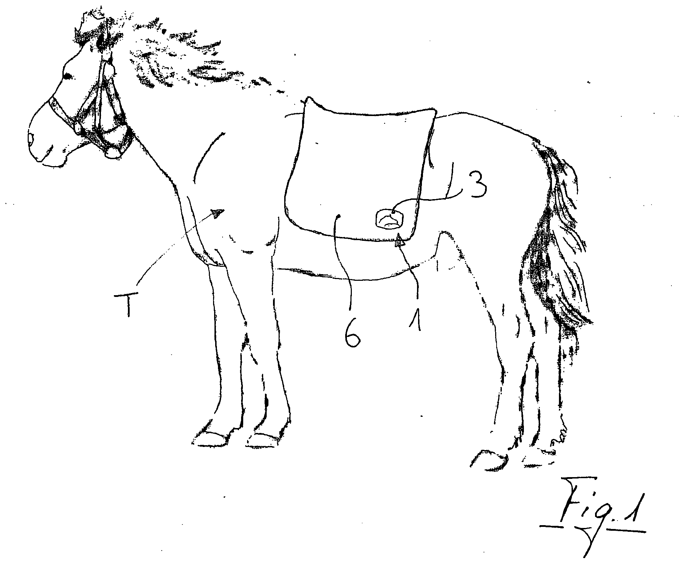

In Figur 1 ist eine auswechselbare Kennzeichnung 1 gezeigt, die zur Kennzeichnung eines Tiers T, insbesondere eines Pferds, dient, insbesondere während eines Turniers, einer Verkaufsshow oder einer ähnlichen Veranstaltung.

Die Kennzeichnung 1 gemäß Figur 1 umfaßt eine Halterung 2 mit einer durchgehenden oder unterbrochenen Platte 3, die in montierter Stellung eine vom Tier T nach außen weisende Außenseite 4 aufweist. Diese ist von außen für zum Beispiel eine Jury und/oder ein Publikum - hier von einer Querseite des Tiers T aus - sichtbar, und hieran sind mehrere Zeichen, wie etwa Nummern, nebeneinander halterbar oder gehalten.

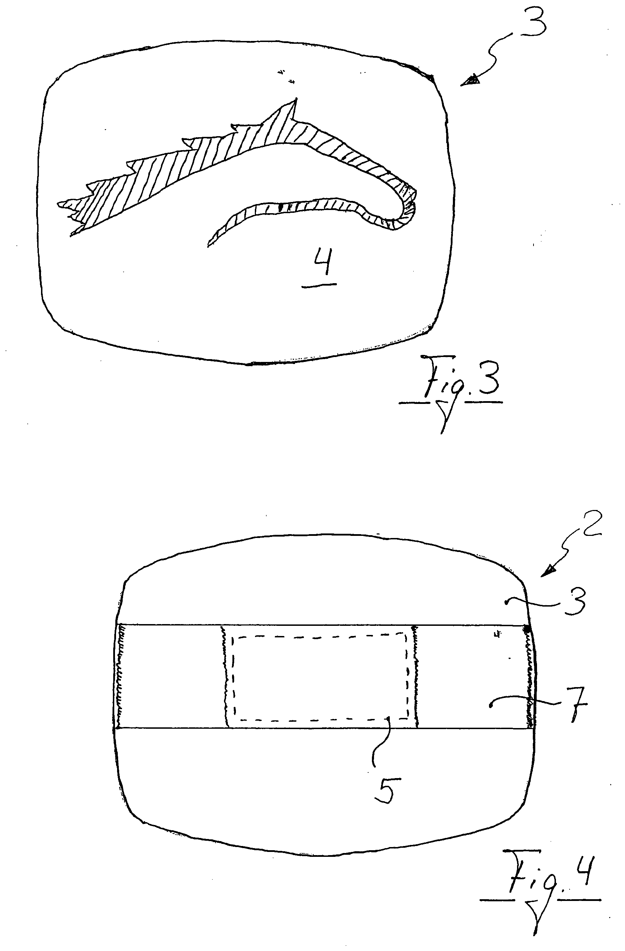

Die Platte 3, die auch eher nach Art eines Rahmens ausgebildet sein kann, ist zumindest bereichsweise para- oder ferromagnetisch und in einer Ausführung an zumindest einem rückseitig der Platte 3 festgehaltenen Magneten 5 selbst magnetisch halterbar. Es besteht also eine doppelte magnetische Halterung sowohl der Platte 3 als auch der an der Platte 3 gehaltenen Zeichen 8. Dieser Magnet 5 ist beispielsweise, wie in Figur 1 dargestellt ist, mittelbar oder unmittelbar in eine Schabracke 6 oder dergleichen Satteldecke eingenäht. Hierfür kann der zumindest eine rückseitig festgehaltene Magnet 5 in einem Stoffbeutel oder einer ähnlichen Tasche 7 aufgenommen sein. Dieser ist dann mittelbar oder unmittelbar an der Schabracke 6 vernäht. Die Außenseite 4 der Platte ist dann ohne Bestückung mit den Zeichen 8 vollflächig und ohne Abdeckungen von außen zu sehen und kann beispielsweise mit einem Markenlogo versehen sein, wie in Figur 3 angedeutet ist.

Die Platte 3 kann dünn ausgebildet sein und zum Beispiel eine Dicke von etwa 0,5 Millimetern umfassen. Die Außenkontur der Platte 3 kann zudem für eine weichere Optik abgerundet sein, so daß diese Platte nur näherungsweise eine Rechteckform hat. Hier ist ein liegendes Rechteck angenähert, das Kantenlängen von ca. 95 Millimetern in der Breite und ca. 70,5 Millimetern in der Höhe aufweist. Auch eine andere Umrißgestalt ist möglich, zum Beispiel auch eine Kreisform.

Der Magnet 5, der in Figur 4 gestrichelt als rechteckiger Körper angedeutet ist, kann ein Neodym-Magnet sein ist oder diesen umfassen. Auch andere preiswerte und gleichzeitig schon bei kleiner Erstreckung starke Magnete sind möglich. Der Magnet 5 hat hier beispielsweise die Form eines liegenden Rechtecks mit einer Quererstreckung von ca. 40 Millimetern und eine Hocherstreckung von ca. 20 Millimetern. Der Stoffbeutel 7 kann verschiedene Formen haben und dient zur festen Verbindung mit der Schabracke 6 oder dergleichen Satteldecke, insbesondere durch Vernähen. Auch ein Verkleben oder Feststecken über Nadeln kann möglich sein.

Es ist auch möglich, daß nur die Platte 3 ferromagnetisch ist und der "Magnet" 5 nur aus einem paramagnetischen Material besteht. Auch dann ist dann zwischen beiden Teilen 3, 5 eine anziehende magnetische Kraft wirksam.

In jedem Fall sind auf der sichtbaren Außenseite 4 der Platte 3 mehrere Zeichen 8 auswechselbar halterbar oder gehalten. Diese Zeichen 8 sind mit Körpern 9 aus einem zumindest teilweise metallischen Material gebildet sind und ebenfalls über Magnetkraft an der Platte 3 halterbar oder gehalten. Die Zeichen sind zudem leicht insgesamt und auch einzeln auswechselbar. Die Größe der Körper 9 ist an die Platte 3 angepaßt.

Insbesondere umfaßt die Platte 3 einen von der Außenseite 4 rückspringenden Bereich 10, der eine Rechteckform ausbildet, hier mit etwa 83 x 50,5 Millimetern. Diese Größe ist zur Aufnahme eines Satzes von drei oder vier Nummern oder ähnlichen Zeichen 8 nebeneinander geeignet. Zudem weist dieser rückspringende Bereich 10 umlaufend - und damit auch unten - für diese Nummern unterseitig eine abstützende Kante 11 auf. Dadurch, daß dieser rückspringende Bereich die eigentliche Aufnahme für die Zeichen 8 bildet, kann die Außenkontur der Platte 3 auch, wie oben beschrieben, variieren.

Die Körper für die Nummern 9 bilden jeweils die Form eine stehenden Rechtecks und umfassen jeweils zumindest zwei flächige Komponenten hintereinander, von denen eine sehr leichte Komponente 12 eine magnetische Folie umfaßt und eine zweite, weiter außen liegende Komponente 13 einen Bereich mit einer aufgedruckten Nummer oder einem Buchstaben oder ähnlichem Zeichen 8 umfaßt. Die erste Komponente 12 mit den magnetischen Eigenschaften ist insbesondere dünner als einen Millimeter, insbesondere dünner als 0,7 Millimeter. Durch den Verzicht auf metallisches Vollmaterial und die Verwendung magnetischer Folien sind die Zeichen 8 mit ihren Körpern 9 sind daher extrem leicht und somit trotz ihrer leichten Auswechselbarkeit auch bei relativ geringer magnetischer Kraft gut gegen ein Runterfallen gesichert. Eine weitere Sicherung ist nicht erforderlich.

In der Ausbildung nach Anspruch 5 können die Zeichen 8 und die sie haltenden Körper 9 genau so ausgebildet sein wie in der ersten Ausbildung. Auch der rückspringende Bereich 10 ist hier in seinen Maßen und in seinen magnetischen Eigenschaften ebenso wie im ersten Ausführungsbeispiel ausgebildet.

Es können daher identische Sätze von Zeichen (zum Beispiel jeweils drei Sätze von Körpern 9, die mit Zeichen 8 als Zahlen von 0 bis 9 versehen sind) Verwendung finden. Damit lassen sich alle Zahlen von 000 bis 999 etwa als Startnummern darstellen. Natürlich sind auch andere Zeichen wie etwa Buchstaben möglich.

Auch hier ist die Platte 3 zumindest bereichsweise para- oder ferromagnetisch, und die darauf gehaltenen Zeichen 8 sind ebenfalls über Magnetkraft an der Platte 3 halterbar oder gehalten. In dieser Ausführung ist jedoch die Platte 3 zusätzlich oder alternativ zu ihrer eigenen Halterung durch Magnetkraft (auch) mechanisch halterbar.

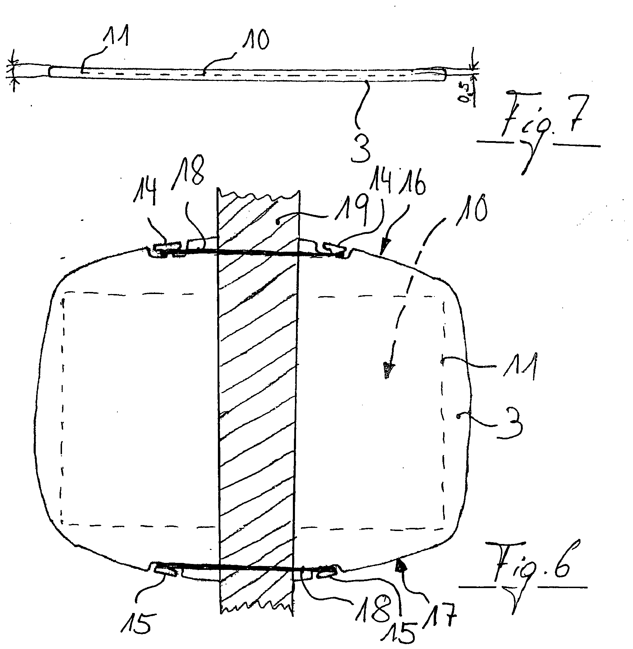

Hierzu weist die Platte 3 Ansätze 14, 15 für eine mechanische Halterung auf. Diese Ansätze 14 bzw. 15 sind jeweils paarweise und horizontal zueinander beabstandet ausgebildet. Die Ansätze 14 sind dabei einer in montierter Stellung oberen Kante 16 und die Ansätze 15 einer unteren Kante 17 der Platte 3 zugeordnet, wie etwa in Figur 6 gut erkennbar ist.

Die genannten Ansätze 14, 15 sind beispielsweise jeweils hakenförmig und innerhalb einer paarweisen Anordnung einander entgegengesetzt angeordnet, so daß in eine paarweise Anordnung von Ansätzen 14 bzw. 15 jeweils ein Gummiband oder ähnliches flexibles Element 18 einsetzbar ist. Damit kann vor dem Gummiband oder ähnlichem flexiblen Element 18 zum Beispiel ein Gurt oder Riemen 19 hintergriffen werden, insbesondere ein Trensengurt, der etwa vertikal verläuft. Auch andere Teile der Halfters oder der Sattelhalterung können als haltender Gurt oder Riemen 19 verwendet werden. Die Platte 3 steht dann voll sichtbar außen vor dem Gurt oder Riemen 19, während die Gummibänder 18 im wesentlichen dahinter verlaufen (Figur 6), so daß die Platte 3 dann vollflächig sichtbar und gleichzeitig gut gesichert an dem Gurt oder Riemen 19 gehalten ist. Dieser ist dann zwischen den Gummibändern 18 und der Platte 3 eingeklemmt. Diese sichere Halterung ist dann sowohl an der oberen Kante 16 als auch an der unteren Kante 17 erreicht.

Insbesondere kann als Gummiband 18 ein Mähnengummi, das zum Binden von Mähnenhaaren geeignet ist, mit den oben genannten Vorteilen verwendet werden. Auch andere Gummibänder können natürlich verwendet werden. Die Mähnengummis sind allerdings bei Turnieren und ähnlichen Veranstaltungen zumeist ohnehin in großer Zahl vor Ort, so daß ihre Verwendung besonders preisgünstig und aufwandarm ist.

### Bezugszeichenliste:

- 1: Kennzeichnung,
- 2: Halterung,
- 3: Platte,
- 4: Außenseite,
- 5: rückseitig festgehaltener Magnet,
- 6: Schabracke,
- 7: Stoffbeutel,
- 8: Zeichen,
- 9: Körper der Zeichen,
- 10: rückspringender Bereich,
- 11: abstützende Kante,
- 12: eine Komponente,
- 13: weiter außen liegende Komponente,
- 14: Ansätze,
- 15: Ansätze,
- 16: obere Kante,
- 17: untere Kante,
- 18: Gummiband oder ähnliches flexibles Element,
- 19: Gurt oder Riemen
- T: Tier, insbesondere Pferd

## Patentansprüche

1. Auswechselbare Kennzeichnung (1) von Tieren (T), insbesondere von Pferden, wobei die Kennzeichnung (1) eine Halterung (2) mit einer durchgehenden oder unterbrochenen Platte (3) umfaßt, die in montierter Stellung eine vom Tier (T) nach außen weisende Außenseite (4) aufweist, an der mehrere Zeichen (8), wie etwa Nummern, nebeneinander halterbar oder gehalten sind,
**dadurch gekennzeichnet,**
**daß** die Platte (3) zumindest bereichsweise para- oder ferromagnetisch ist und an zumindest einem rückseitig festgehaltenen Magneten (5) selbst magnetisch halterbar ist, wobei auf der Platte (3) halterbare oder gehaltene Zeichen (8) mit Körpern (9) aus einem zumindest teilweise metallischen Material gebildet sind und über Magnetkraft an der Platte (3) halterbar oder gehalten sind.

2. Kennzeichnung (1) nach Anspruch 1,
**dadurch gekennzeichnet,**
**daß** der zumindest eine rückseitig festgehaltene Magnet (5) mittelbar oder unmittelbar in eine Schabracke (6) oder dergleichen Satteldecke eingenäht ist.

3. Kennzeichnung (1) nach einem der Ansprüche 1 oder 2,
**dadurch gekennzeichnet,**
**daß** der zumindest eine rückseitig festgehaltene Magnet (5) ein Neodym-Magnet ist oder diesen umfaßt.

4. Kennzeichnung (1) nach einem der Ansprüche 1 bis 3,
**dadurch gekennzeichnet,**
**daß** der zumindest eine rückseitig festgehaltene Magnet (5) in einem Stoffbeutel (7) aufgenommen ist und dieser mittelbar oder unmittelbar an der Schabracke (6) vernäht ist.

5. Kennzeichnung (1) von Tieren (T), insbesondere von Pferden, wobei die Kennzeichnung (1) eine Halterung (2) mit einer durchgehenden oder unterbrochenen Platte (3) umfaßt, die in montierter Stellung eine vom Tier (T) nach außen weisende Außenseite (4) aufweist, an der mehrere Zeichen (8), wie etwa Nummern, nebeneinander halterbar oder gehalten sind,
**dadurch gekennzeichnet,**
**daß** die Platte zumindest bereichsweise para- oder ferromagnetisch ist und die darauf gehaltenen Zeichen an Körper aus oder mit einem metallischen Material gebildet sind und über Magnetkraft an der Platte halterbar oder gehalten sind.

6. Kennzeichnung (1) nach Anspruch 5,
**dadurch gekennzeichnet,**
**daß** die Platte (3) Ansätze (14;15) für eine mechanische Halterung umfaßt.

7. Kennzeichnung (1) nach Anspruch 6,
**dadurch gekennzeichnet,**
**daß** die Ansätze (14; 15) jeweils paarweise und horizontal zueinander beabstandet ausgebildet sind.

8. Kennzeichnung (1) nach einem der Ansprüche 6 oder 7,
**dadurch gekennzeichnet,**
**daß** die Ansätze (14; 15) jeweils hakenförmig und innerhalb einer paarweisen Anordnung einander entgegengesetzt angeordnet sind.

9. Kennzeichnung (1) nach einem der Ansprüche 6 bis 8,
**dadurch gekennzeichnet,**
**daß** die Ansätze (14;15) an einer oberen Kante (16) und an einer unteren. Kante (17) der Platte (3) angeordnet sind.

10. Kennzeichnung (1) nach einem der Ansprüche 6 bis 9,
**dadurch gekennzeichnet,**
**daß** in eine paarweise Anordnung von Ansätzen (14;15) jeweils ein Gummiband oder ähnliches flexibles Element (18) einsetzbar ist.

11. Kennzeichnung (1) nach Anspruch 10,
**dadurch gekennzeichnet,**
**daß** als Gummiband (18) ein Mähnengummi, das zum Binden von Mähnenhaaren geeignet ist, verwendbar ist.

12. Kennzeichnung (1) nach einem der Ansprüche 10 oder 11,
**dadurch gekennzeichnet,**
**daß** von dem oder jedem Gummiband oder ähnlichem flexiblen Element (18) ein Gurt oder Riemen (19), insbesondere ein Trensenriemen, zur Halterung der Platte (3) hintergreifbar oder hintergriffen ist.

13. Kennzeichnung (1) nach einem der Ansprüche 1 bis 12,
**dadurch gekennzeichnet,**
**daß** die Platte (2) einen von der Vorderseite rückspringenden Bereich (10) umfaßt, dessen Größe zur Aufnahme eines Satzes von drei oder vier Zeichen (8) nebeneinander geeignet ist und der für diese Nummern zumindest unterseitig eine abstützende Kante (11) aufweist.

14. Kennzeichnung (1) nach einem der Ansprüche 1 bis 13,
**dadurch gekennzeichnet,**
**daß** die Zeichen (8), insbesondere Nummern, jeweils einzeln Bestandteil eines Körpers (9) sind, die jeweils zumindest zwei Komponenten (11;12) umfassen, von denen eine Komponente (11) eine magnetische Folie umfaßt und eine zweite, weiter außen liegende Komponente (12) einen Bereich mit einer aufgedruckten Nummer (8) oder einem Buchstaben umfaßt.

15. Kennzeichnung (1) nach einem der Ansprüche 1 bis 14,
**dadurch gekennzeichnet,**
**daß** die Komponente (11) der magnetischen Folie dünner als einen Millimeter, insbesondere dünner als 0,7 Millimeter, ist.
